# EUROPEAN PATENT APPLICATION

(11) **EP 4 414 766 A1**
(43) Date of publication of application: **14.08.2024**
(21) Application number: 23155716.6
(22) Date of filing: 09.02.2023
(51) Int. Cl.: G02B 21/10, G02B 21/16, G02B 21/36

(54) **OPTICAL SYSTEM FOR THE DIGITAL IMAGING OF UNSTAINED TISSUE SAMPLES AND METHOD THEREOF**

(71) Applicant: Siemens Healthineers AG, 91301 Forchheim (DE)
(72) Inventor: Dethlefsen, Mark, 91058 Erlangen (DE); Engel, Thomas, 73432 Aalen (DE); Marquardt, Gaby, 91353 Hausen (DE)
(74) Representative: Siemens Healthineers Patent Attorneys

(57) **Abstract**

An optical system for the digital imaging of unstained tissue samples, comprising: a first illumination source unit, configured to illuminate an unstained tissue sample with light sources, each defining a different light incidence angle with respect to the unstained tissue sample, wherein the wavelengths of the light sources are adapted to produce fluorescence of at least parts of the unstained tissue sample; a microscope, comprising at least an objective and a light detector, wherein the light detector is configured to receive the light emitted from the illuminated unstained tissue sample, wherein the first illumination source unit is located between the unstained tissue sample and the objective of the microscope; and a Fourier Ptychography unit, configured to generate, based on the light received by the light detector, a corresponding digital image of the unstained tissue sample with a first field of view by deploying Fourier Ptychography Microscopy.

## Description

The present invention relates to an optical system for the digital imaging of unstained tissue samples in clinical and medical environments. The present invention further relates to a method for providing digital imaging of unstained tissue samples.

The invention is mostly described through its applications to the fields of digital histology, histopathology and dermatology, but the principles of the invention have a broader scope and apply equally well to other medical applications that involve the imaging of tissue samples.

Biopsies are important diagnostic tools in the clinical and medical environments, which are regularly used in oncology in order to detect or identify cancers, but are also employed to analyse infections of inflammatory disorders of soft tissue.

A biopsy conventionally requires the removal of small amounts of tissue, which is done surgically. These tissue samples are sent to a laboratory in order for them to be processed. Before a pathologist can examine the samples with a microscope, they have to be thinly sliced (usually below a thickness of 10 microns), mounted onto a cover slide, and stained (e.g. with hematoxylin and eosin stain, H&E stain).

The whole processing of the removed tissue samples can last hours and it typically takes days before the collected tissue samples can be explored by a pathologist, a diagnosis can be reach and a corresponding surgery, if necessary, can be planned.

It would be preferable, especially in cases where the biopsy reveals the need for urgent surgery, to be able to shorten the processing time of the tissue samples. In particular, it would be advantageous if the steps of slicing and staining could be skipped.

With conventional optical microscopes this is however not possible. Thin slicing of the tissue samples is done in order to clearly identify structures like cells. If the tissue samples are not thin enough, different layers of cells might overlap, which makes their identification difficult and can impair a reliable diagnosis. Staining is required in order to enhance the contrast between the different features (e.g. parts of the cells) of the tissue samples.

In the last decade, there have been advances in microscopy with the so-called Fourier Ptychography Microscopy. Fourier Ptychography is a technology in digital microscopy which provides high resolution and large field-of-view images by combining together in Fourier space different low-resolution images of an object taken from multiple illumination angles with microscope objectives having low numerical apertures. For details, see, e.g., Zheng, G., Horstmeyer, R. & Yang, C. "Wide-field, high-resolution Fourier ptychographic microscopy". Nature Photon 7, 739-745 (2013).

Quite recently, the applications of Fourier Ptychography in histology have been explored in Horstmeyer, R. et al., "Digital pathology with Fourier ptychography," Computerized Medical Imaging and Graphics, Volume 42, 2015, Pages 38-43, ISSN 0895-6111. In particular, in Fereidouni, F. et al., "Dual-mode emission and transmission microscopy for virtual histochemistry using hematoxylin- and eosin-stained tissue sections," Biomed. Opt. Express 10, 6516-6530 (2019), the possibility of reliably imaging hematoxylin and eosin (H&E) stains of thick tissue sections has been described.

It is an object of the present invention to provide an optical system based on the methods and techniques used in Fourier Ptychography Microscopy, which can image thick sections of tissue without the need of staining.

The purpose of this invention is achieved through a system with the features disclosed in claim 1 and a method with the features detailed in claim 15. Preferred embodiments of the invention with advantageous features are given in the dependent claims.

Herein and in the forthcoming, independent of the grammatical term usage, individuals with male, female or other gender identities are included within the term.

A first aspect of the invention provides an optical system for the digital imaging of unstained tissue samples, comprising: a first illumination source unit, configured to illuminate an unstained tissue sample with light sources, each defining a different light incidence angle with respect to the unstained tissue sample, wherein the wavelengths of the light sources are adapted to produce fluorescence of at least parts of the unstained tissue sample; a microscope, comprising at least an objective and a light detector, wherein the light detector is configured to receive the light emitted from the illuminated unstained tissue sample, wherein the first illumination source unit is located between the unstained tissue sample and the objective of the microscope; and a Fourier Ptychography unit, configured to generate, based on the light received by the light detector, a corresponding digital image of the unstained tissue sample with a first field of view by deploying Fourier Ptychography Microscopy. This first field of view after deploying Fourier Ptychography Microscopy is larger than the nominal field of the view of the microscope.

Herein and in the forthcoming, unstained tissue samples refer to tissue samples which have not been treated chemically, e.g. with a hematoxylin and eosin stain (H&E stain). The tissue samples will typically comprise mammalian tissue samples, in particular human tissue samples of a patient. In the following, whenever the term tissue sample is used, it will refer to an unstained tissue sample.

A microscope can be any state-of-the-art optical microscope adapted to work with light frequencies ranging from the infrared (IR) to the ultraviolet (UV) spectrum, comprising at least an objective, preferably with a low numerical aperture, and a light detector. The microscope can also comprise a sample holder or a sample area where a tissue sample can be positioned. The light detector of the microscope comprises any device that includes light-sensitive sensors, e.g. a CCD or CMOS camera, and means to transmit the information acquire by the sensors for further processing.

Light sources, herein and in the foregoing, will refer to illumination devices (fibre-based or laser-based, e.g. LEDs) of arbitrary wavelength and power. The light sources can be spatially arranged in different configurations along the first illumination source unit.

The first illumination source unit is any arrangement of light sources that is placed between the objective of the microscope and the tissue sample, preferably at a distance of between 10cm to 40cm to the tissue sample to be examined. The first illumination source unit is used to cover the large-angle illumination of the tissue sample, such that the microscope operates with dark-field illumination. The oblique rays are diffracted, reflected or refracted by the different parts of the tissue sample, e.g., by the cell membranes, the cell nucleus or internal organelles within the cytoplasm.

With this spatial arrangement of the first illumination source unit, the microscope works in a reflected light configuration, where the light emitted from the tissue sample after its illumination travels through the objective of the microscope and is subsequently detected by the light detector.

The fluorescence of parts of the tissue sample takes place when the electromagnetic radiation emitted by the light sources gets partially absorbed by those parts of the tissue sample, and whose atoms get de-excited by emitting light of a longer wavelength than the absorbed one, wherein the emitted light has a wavelength in the visible region of the electromagnetic spectrum.

Fourier Ptychography Microscopy (FPM) is a digital microscopy technology through which high resolution images with a large field of view (typically 120 mm²) can be generated. This is achieved by acquiring a number of low-resolution images from multiple illumination angles using an optical microscope with an objective with a low numerical aperture (NA). These images are combined (or stitched) in Fourier space. FPM can also perform digital refocusing, thus facilitating the discrimination of the different layers within a sample. This property permits to increase the thickness of the tissue samples to be processed. FPM thus provides a combination of a higher resolution (typically at NA of 0,6 or 0,8 or 0,95 at the center of the field of view) with a larger field of view and depth of view than in conventional (i.e., non-FPM) microscopy.

The Fourier Ptychography unit is to be broadly understood as an entity capable of acquiring, obtaining, receiving or retrieving generic data and/or instructions through a user interface and/or programming code and/or executable programs or any combination thereof. It is further adapted to run programming code and executable programs and to deliver the results for further processing.

The Fourier Ptychography unit, or parts thereof, may therefore contain, at least, a central processing unit, CPU, and/or at least one graphics processing unit, GPU, and/or at least one field-programmable gate array, FPGA, and/or at least one application-specific integrated circuit, ASIC and/or any combination of the foregoing. It may further comprise a working memory operatively connected to the at least one CPU and/or a non-transitory memory operatively connected to the at least one CPU.

In particular, the Fourier Ptychography unit of the invention may be implemented partially and/or completely in a local apparatus, e.g. a computer, in a system of computers and/or partially and/or completely in a remote system such as a cloud computing platform.

All of the elements of the Fourier Ptychography unit may be realized in hardware and/or software, cable-bound and/or wireless, and in any combination thereof. Any of the elements may comprise an interface to an intranet or the Internet, to a cloud computing service, to a remote server and/or the like.

In systems based on cloud computing technology, a large number of devices is connected to a cloud computing system via the Internet. The devices may be located in a remote facility connected to the cloud computing system. For example, the devices can comprise, or consist of, equipment, sensors, actuators, robots, and/or machinery in an industrial set-up(s). The devices can be medical devices and equipment in a healthcare unit. The devices can be home appliances or office appliances in a residential/commercial establishment.

The cloud computing system may enable remote configuring, monitoring, controlling, and maintaining connected devices (also commonly known as 'assets'). Also, the cloud computing system may facilitate storing large amounts of data periodically gathered from the devices, analyzing the large amounts of data, and providing insights (e.g., Key Performance Indicators, Outliers) and alerts to operators, field engineers or owners of the devices via a graphical user interface (e.g., of web applications). The insights and alerts may enable controlling and maintaining the devices, leading to efficient and fail-safe operation of the devices. The cloud computing system may also enable modifying parameters associated with the devices and issues control commands via the graphical user interface based on the insights and alerts.

The cloud computing system may comprise a plurality of servers or processors (also known as 'cloud infrastructure'), which are geographically distributed and connected to each other via a network. A dedicated platform (hereinafter referred to as 'cloud computing platform') is installed on the servers/processors for providing above functionality as a service (hereinafter referred to as 'cloud service'). The cloud computing platform may comprise a plurality of software programs executed on one or more servers or processors of the cloud computing system to enable delivery of the requested service to the devices and its users.

One or more application programming interfaces (APIs) are deployed in the cloud computing system to deliver various cloud services to the users.

A second aspect of the present invention provides a method for the digital imaging of unstained tissue samples, comprising the following steps: (a) illuminating an unstained tissue sample with light sources, each defining a different light incidence angle with respect to the unstained tissue sample, wherein the wavelengths of the light sources are adapted to produce fluorescence of at least parts of the unstained tissue sample; (b) detecting, with a light detector of a microscope, the light emitted from the illuminated unstained tissue sample; and (c) generating, based on the light received by the light detector, a corresponding digital image of the unstained tissue sample with a first field of view by deploying Fourier Ptychography Microscopy.

In particular, the method according to the second aspect of the invention may be carried out with the optical system according to the first aspect of the invention. The features and advantages disclosed herein in connection with the optical system are therefore also disclosed for the method, and vice versa.

According to a third aspect, the invention provides a computer program product comprising executable program code configured to, when executed, perform at least some of the steps of the method according to the second aspect of the present invention, in particular the step of generating, based on the light received by the light detector, a corresponding digital image of the unstained tissue sample with a first field of view by deploying Fourier Ptychography Microscopy.

According to a fourth aspect, the invention provides a non-transient computer-readable data storage medium comprising executable program code configured to, when executed, perform at least some of the steps of the method according to the second aspect of the present invention, in particular the step of generating, based on the light received by the light detector, a corresponding digital image of the unstained tissue sample with a first field of view by deploying Fourier Ptychography Microscopy.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

According to a fifth aspect, the invention provides a data stream comprising, or configured to generate, executable program code configured to, when executed, perform at least some of the steps of the method according to the second aspect of the present invention, in particular the step of generating, based on the light received by the light detector, a corresponding digital image of the unstained tissue sample with a first field of view by deploying Fourier Ptychography Microscopy.

One of the main ideas underlying the present invention is to provide an optical system comprising a microscope and an illumination arrangement, such that the microscope works in a reflected light setting, where the light is detected by a microscope light detector after first being reflected on the tissue sample. The light sources are chosen such that parts of the tissue sample, especially those on its deeper layers, fluoresce. This choice of light sources enhances the contrast of the different parts of the tissue sample and the need for staining is accordingly eliminated. Furthermore, the reflected light is processed using the technology of Fourier Ptychography microscopy, such that thick tissue samples can be imaged with high resolution.

The optical system as described above allows for a simple implementation of a method for the digital imaging of unstained tissue samples, comprising a number of steps. In one step, the tissue sample is illuminated with an arrangement of light sources placed on an optical microscope working on a reflected light setting, where the light sources are chosen to generate fluorescence from certain parts of the tissue sample. In another step, the light reflected from the tissue sample is detected by a light detector of the microscope (e.g. a CCD camera). In a further step, the detected light is processed using Fourier Ptychography and a corresponding digital image of the tissue sample is generated.

One advantage of the present invention is that histological tissue samples can be examined without the need for thin slicing or staining. This simplifies the clinical workflow and allows a pathologist to have access to a high-resolution digital imaging of the tissue samples that can be examined in real time. The time required to produce a diagnosis and to perform a potential surgery gets accordingly reduced, which both optimizes resources from the clinical or medical side and saves the patient time.

A further advantage of the present invention is that, since no thin slicing nor staining are required, it opens the possibility to perform the examination of tissue samples, in certain instances, without the need to remove tissue. This can be especially relevant for the diagnosis of inflammations of the epidermis or for an early detection of different types of skin cancer, e.g. melanoma.

Advantageous embodiments and further developments follow from the dependent claims as well as from the description of the different preferred embodiments illustrated in the accompanying figures.

According to some embodiments, refinements, or variants of embodiments, the light sources of the first illumination source unit comprise an arrangement of LEDs. The light sources can be laser-based or fibre-based illumination means. LEDs are in particular compact and versatile light sources, which can be placed in different geometrical arrangements and can provide illumination with different wavelengths.

According to some embodiments, refinements, or variants of embodiments, the first illumination source unit comprises a number of light sources with different wavelengths. The different parts of the tissue samples, in particular the different parts of the cells, have different absorption and scattering properties depending on the wavelength of the illumination light used. Using, e.g., arrangements of LEDs with different wavelengths allows for a differentiation of the cell parts and also a discrimination of depth of the different layers of the tissue sample. Additionally, certain wavelengths can excite parts of the tissue sample into fluorescence, especially the deeper layers of the tissue sample. This bright background of the deeper layers of the tissue also helps enhance the depth discrimination of the tissue sample.

According to some embodiments, refinements, or variants of embodiments, the wavelengths of the light sources of the first illumination source unit are correlated with the light incidence angle under which they illuminate the unstained tissue sample. Depending on the scattering properties of the tissue sample, it might be advantageous to arrange the light sources such that different illumination angles are probed with specific wavelengths. The images thus obtained can be stitched to generate the digital image of the tissue sample by extending the principles of Fourier Ptychography to include information from multiple-wavelength illumination.

According to some embodiments, refinements, or variants of embodiments, the wavelengths of the light sources of the first illumination source unit are in the UV region of the electromagnetic spectrum, preferably in the UV-C region, more preferably between 260nm and 280nm. In the UV region, there are different absorption mechanisms which can lead to strong absorption contrast. In particular, UV light provides a good differentiation of proteins and nucleotides, since they strongly absorb UV-C light, particularly close to 280nm.

According to some embodiments, refinements, or variants of embodiments, the optical system further comprises a second illumination source unit, which is configured to illuminate the unstained tissue sample through the objective of the microscope.

On top of the first illumination source unit, which provides large-angle (dark-field) illumination, in certain embodiments of the invention it is advantageous to provide a second illumination source unit, which provides low-angle (bright-field) illumination. With low-angle illumination the light beam illuminates the tissue sample trough the objective of the microscope. The light sources have to be adjusted accordingly, especially in terms of wavelength, such that the objective lens of the microscope does not get damaged. Furthermore, when a second illumination source unit is present, it is convenient to provide a beam splitter between the objective of the microscope and the light detector, such that the illumination light is filtered out and only the light reflected from the tissue sample is detected by the light detector.

According to some embodiments, refinements, or variants of embodiments, the optical system further comprises a coverslip, which is located against a side of the unstained tissue sample facing the objective of the microscope.

Adding a coverslip (also to be referred to as a cover glass or a cover slide) on the side of the objective of the microscope, i.e., into the light path of the optical system might be advantageous in order to flatten the surface of the tissue sample. This flattening of the tissue sample will also lead to an improved imaging performance, since the field of view of the tissue sample will increase while being within the depth of field of the objective.

Adding such a coverslip can also protect the surface of the tissue sample from getting dry under the effect of the illumination or air flow.

According to some embodiments, refinements, or variants of embodiments, the coverslip is made of a material that is transparent to the wavelength of the light sources of the first illumination source unit. When the illumination is based on UV light, the cover glass can be made of quartz, fused silica, or any material or combination of materials that is transparent under (i.e. it does not fully absorb) UV light.

According to some embodiments, refinements, or variants of embodiments, the unstained tissue samples comprise slices of a thickness greater than 10 microns. One of the main advantages of the present invention is that no thin slicing (i.e. slicing of the tissue sample with thicknesses below 10 microns) is necessary. Tissue samples can still be sliced, but its thickness can be substantially larger. This is advantageous in that the number of slices to be analyzed is reduced. This sliced thick tissue cuts can be prepared as frozen tissue dissections following some of the conventional tissue preparation technologies, but without the need to stain them. The thick tissue slices according to the present invention could preferably have a thickness twice as large as the depth of field of the microscope.

According to some embodiments, refinements, or variants of embodiments, the optical system further comprises a coverslip which is placed against the unstained tissue sample such that the unstained tissue sample is between the coverslip and the objective of the microscope. This arrangement is particularly advantageous if one is dealing with thick slices of tissue sample. The presence of this coverslip can also be combined with another coverslip place into the beam path of the optical system, such that the tissue sample is covered from both sides.

According to some embodiments, refinements, or variants of embodiments, the optical system further comprises a scanning device, configured to increase the field of view of the generated digital image with respect to the first field of view.

As already discussed, Fourier Ptychography digitally enlarges the field of view of an optical microscope. In some cases, however, this enlargement might not be sufficient to cover the region of interest needed for a pathologist to reach a diagnosis or a clinical decision. In provision of this, the optical system can be provided with a device that facilitates an X/Y lateral scanning. This device can comprise an engine, a motor, a piezoelectric motor or the like, connected to a computer, which is configured to move the optical system on the plane perpendicular to the beam path to increase the area of the tissue sample to be illuminated.

According to some embodiments, refinements, or variants of embodiments, the Fourier Ptychography unit is implemented in a decentralized computing unit, a server, an edge cloud platform, a cloud computing platform, or any combination of the aforementioned. In some embodiments, depending on the protocols and capabilities of a clinic or hospital, it might be advantageous that the generation of the digital images take place in different computing environments. The digital images can subsequently be stored as files in those devices or platforms and be retrieved by one or more users for a visualization.

According to some embodiments, refinements, or variants of embodiments, the optical system is adapted to be a portable device for the diagnostic assistance of skin abnormalities.

In some preferred embodiments, the optical system of the invention can be brought to a size and built in a way that it can be used by an epidemiologist or an oncologist to examine the epidermis of a patient. This can facilitate a quick detection and diagnosis of some skin cancers, in particular melanoma, as well as inflammatory conditions of the skin.

In some other preferred embodiments, the optical system of the invention can be used in critical tumor resections (e.g. brain, liver, lung or kidney resections), in which the impact on healthy, non-tumorous tissue has to be minimized. In this case, the coverslip could be a consumable viewing glass attached or sealed onto a sterilization drape or wrap covering the optical system or parts thereof.

In all these embodiments, in order to increase the manoeuvrability of the optical system, the optical system can operate with a battery-powered system and have wireless communication capabilities.

According to some embodiments, refinements, or variants of embodiments, the digital images generated by the Fourier Ptychography unit can be visualized in a graphical user interface. The graphical user interface can be installed in a physical apparatus (e.g., on a video display unit). The digital images to be visualized can be retrieved from a computer, a server or a cloud computing platform.

In some embodiments, the digital images can be managed (e.g., zoomed in or out and saved as files) by a pathologist through a command line interface, a menu-driven user interface, or a touch user interface.

The above embodiments and implementations can be combined with each other as desired, as far as this is reasonable.

Although here, in the foregoing and also in the following, some functions are described as being performed by units or subunits, it shall be understood that this does not necessarily mean that such units or subunits are provided as entities separate from one another. In cases where one or more units are provided as software, the units may be implemented by program code sections or program code snippets, which may be distinct from one another but which may also be interwoven or integrated into one another.

Similarly, in cases where one or more units are provided as hardware, the functions of one or more units may be provided by one and the same hardware component, or the functions of several units may be distributed over several hardware components, which need not necessarily correspond to the units. Thus, any apparatus, device, system, method and so on which exhibits all of the features and functions ascribed to a specific unit shall be understood to comprise, or implement, said unit. In particular, it is a possibility that all units are implemented by program code executed by a computing device, for instance on a (local) server or a cloud computing platform.

Further scope of the applicability of the present method and device will become apparent from the following figures, detailed description and claims. However, it should be understood that the detailed description and specific examples, while indicating preferred embodiments of the invention, are given by way of illustration only, since various changes and modifications within the spirit and scope of the invention will become apparent to those skilled in the art.

Aspects of the present disclosure will be better understood with reference to the following figures.

In the figures:
Fig. 1 is a schematic depiction of an optical system for the digital imaging of unstained tissue samples according to an embodiment of the present invention;
Fig. 2 is a block diagram showing an exemplary embodiment of a method for the digital imaging of unstained tissue samples corresponding to the present invention;
Fig. 3 is a schematic depiction of an optical system for the digital imaging of unstained tissue samples according to another embodiment of the present invention;
Fig. 4 is a schematic block diagram illustrating a computer program product according to an embodiment of the third aspect of the present invention; and
Fig. 5 is a schematic block diagram illustrating a non-transitory computer-readable data storage medium according to an embodiment of the fourth aspect of the present invention.

Parts in the different figures that correspond to the same elements are indicated with the same reference numerals.

The components in the drawings are not necessarily to scale, emphasis being placed instead upon clearly illustrating the principles of the present disclosure. Likewise, certain components can be shown in generalized or schematic form in the interest of clarity and conciseness. In some instances, well-known structures and devices are shown in block diagram form in order to avoid obscuring the concepts of the present invention.

The numeration of the steps in the methods are meant to ease their description. They do not necessarily imply a certain ordering of the steps. In particular, several steps may be performed concurrently.

The detailed description of the figures includes specific details for the purpose of providing a thorough understanding of the present invention. However, it will be apparent to those skilled in the art that the present invention may be practised without these specific details.

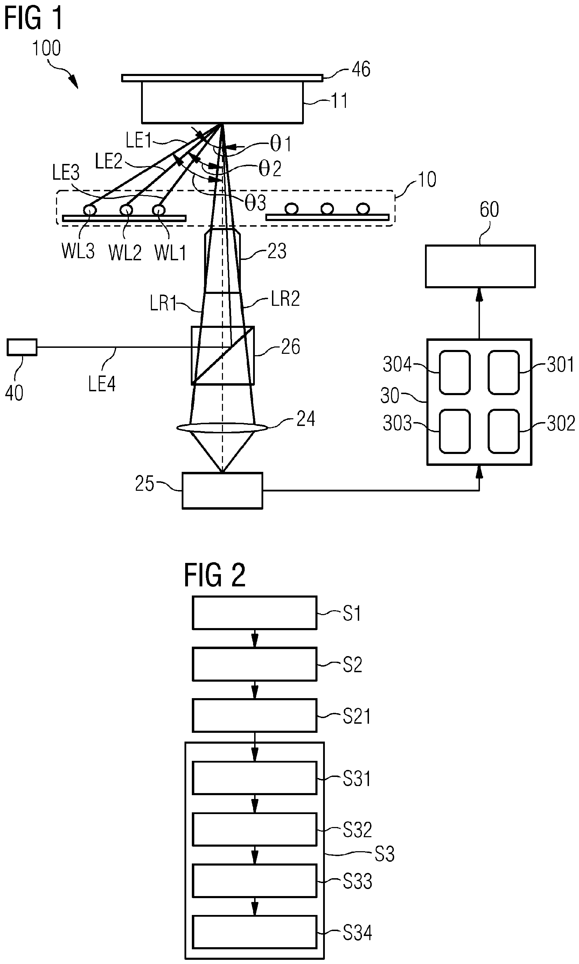

Fig. 1 shows a schematic depiction of an optical system 100 for the digital imaging of unstained tissue samples 11 according to an embodiment of the present invention. In preferred embodiments of the invention, the tissue sample 11 is a thick tissue sample, i.e., a tissue sample with thickness above the 10 microns.

The optical system 100 depicted in Fig. 1 comprises a first illumination source unit 10, a microscope with an objective 23, a beam splitter 26, a focusing lens 24 and a light detector 25, a second illumination source unit 40, a Fourier Ptychography unit 30, a graphical user interface 60 and a coverslip 46.

The microscope can be a conventional optical microscope, adapted to work with light wavelengths ranging from the infrared (IR) to the ultraviolet (UV) spectrum.

The objective 23 of the microscope has a low numerical aperture such as an aperture under 0.25, and preferably at 0.2.

The focusing lens 24 of the microscope is configured to focus the light coming from the tissue sample 11.

The light detector 25 of the microscope is a device that includes light-sensitive sensors, e.g. a CCD camera. Further, it comprises means to transmit the information acquired by the light-sensitive sensors for further processing. The light detector 25 is placed on the focal plane of the focusing lens 24.

The optical system 100 of Fig. 1 comprises a first illumination source unit 10, configured to implement a number of light sources WL1, WL2, WL3, not necessarily of the same wavelength. The light sources WL1, WL2, WL3 depicted in Fig. 1 can be, e.g., a number of LEDs. In Fig. 1, a cross section of the first illumination source unit 10 is shown. For simplicity, only 3 light sources WL1, WL2, WL3 on each side of the objective 23 have been depicted. However, it should be clear that the number of light sources WL1, WL2, WL3 can be arbitrary. In particular, the arrangement of light sources WL1, WL2, WL3 can typically build a three dimensional structure around the objective 23 of the microscope. This structure can be, e.g., a square lattice, where the light sources WL1, WL2, WL3 are arranged in rows and columns, a section of a paraboloid lattice, where the symmetry axis passes through the objective 23, or a section of a spherical lattice symmetrically arranged around the objective 23.

In some of the preferred embodiments, the wavelengths of the light sources WL1, WL2, WL3 are on the ultraviolet (UV) region of the electromagnetic spectrum, preferably in the UV-C region, more preferably between 260nm and 280nm. The absorption of some proteins and nucleotides is particularly large for these wavelengths, and fluorescence of the deeper layers of the tissue sample 11 can be induced. This fluorescence contributes to enhance the contrast between the different parts of the tissue sample 11 and, in particular, to discriminate its different parts based on their respective depth inside the tissue.

In some other preferred embodiments, the light sources WL1, WL2, WL3 have a wavelength distribution that is correlated with the corresponding incidence angles Θ1, Θ2, Θ3 of the corresponding light rays LE1, LE2, LE3. Depending on the properties of the tissue sample, certain wavelengths at certain angles can lead to an enhance contrast after Fourier Ptychography techniques are applied.

The first illumination source unit 10 is configured to provide large-angle illumination to the tissue sample. As an example, in Fig. 1 the light sources WL1, WL2, WL3 each emit light with corresponding light rays LE1, LE2, LE3, which define incidence angles Θ1, Θ2, Θ3 with respect to the tissue sample. These emitted light rays LE1, LE2, LE3 get partially absorbed by the tissue sample 11 and reemitted as a set of light rays, which are delimited by the light rays LR1, LR2 depicted in Fig. 1. The light rays LR1, LR2 describe light paths that traverse the focusing lens 24 and get collected by the light detector 25.

In some embodiments, such as the one depicted in Fig. 1, the optical system 100 comprises a second illumination source unit 40, which includes one or more laser-based or fibre-based light sources with a wavelength ranging between the IR and the UV electromagnetic spectrum. The second illumination source unit 40 is configured to provide low-angle illumination to the tissue sample 11. In Fig. 1, the second illumination source unit 40 is placed on a lateral side of the microscope and used in combination with a beam splitter 26.

The beam splitter 26 comprises a prism and it is configured to split a light beam into a reflected and a transmitted component. The prism can comprise a dichroic mirror, which can be adapted to discriminate reflected from transmitted light based on their wavelength.

In Fig. 1, a representative light beam LE4 emitted from the second illumination source unit 40 is depicted. The light beam LE4 is deflected by the beam splitter 26, it travels through the objective 23 and towards the tissue sample 11, where it gets partially absorbed and reemitted by the tissue sample 11, possibly as fluorescent light. This light travels within the cone defined by the light rays LR1, LR2 and through the beam splitter 26. The dichroic mirror is adapted to filter the light emitted by the tissue sample 11, which gets transmitted and focussed by the focusing lens 24 onto the light detector 25.

In some embodiments of the invention, such as the one depicted in Fig. 1, the optical system 100 comprises a coverslip 46, which can be a conventional cover glass. The coverslip 46 is configured to provide a stable physical support to the tissue sample 11.

In Fig. 1, a Fourier Ptychography unit 30 is also shown, which is configured to process the light detected by the light detector 25 using the technology of Fourier Ptychography Microscopy and to generate at least a digital image corresponding to the tissue sample 11. The Fourier Ptychography unit 30 is wired to or wirelessly connected with the light detector 25 of the microscope, from which it can retrieve and read information.

The Fourier Ptychography unit 30 can comprise, in some embodiments, a light arrangement subunit 301, a combination subunit 302, an image recovery subunit 303 and a storage subunit 304.

The light arrangement subunit 301 is configured to receive an information about the light arrangement of the first illumination source unit 10, in particular the positions of the light sources WL1, WL2, WL3 (including the incidence angles Θ1, Θ2, Θ3) together with the values of the corresponding wavelengths, and also of the second illumination source unit 40. This information can be provided, at least partially, in a readable computer file.

The combination subunit 302 is configured to, based on the information provided by the light arrangement subunit 301, iteratively stitch together in Fourier space the variably illuminated, low-resolution intensity images collected by the light detector 25 and generate an information about the spatial distribution of the intensity and phase of the light coming from the tissue sample 11.

The image recovery subunit 303 is configured to generate, based on the information about the spatial distribution of the intensity and phase of the light coming from the tissue sample 11, a digital image of the tissue sample 11 with a large field of view (at least 120 mm²), a large depth of field and a high resolution (typically below one micron).

The storage subunit 304 is configured to save and store the digital image of the tissue sample 11 generated by the image recovery subunit 303 and to have it accessible for later retrieval and re-examination. The storage subunit 304 can also store the associated collection of images obtained from the light detector 25 of the microscope.

In the embodiment depicted in Fig. 1, the optical system 100 further comprises a graphical user interface 60, with which the digital image generated by the Fourier Ptychography unit 30 can be visualized in real time. The graphical user interface 60 can be a monitor of a computer unit or a portable device (e.g. a tablet), preferably with touch-sensitive capabilities.

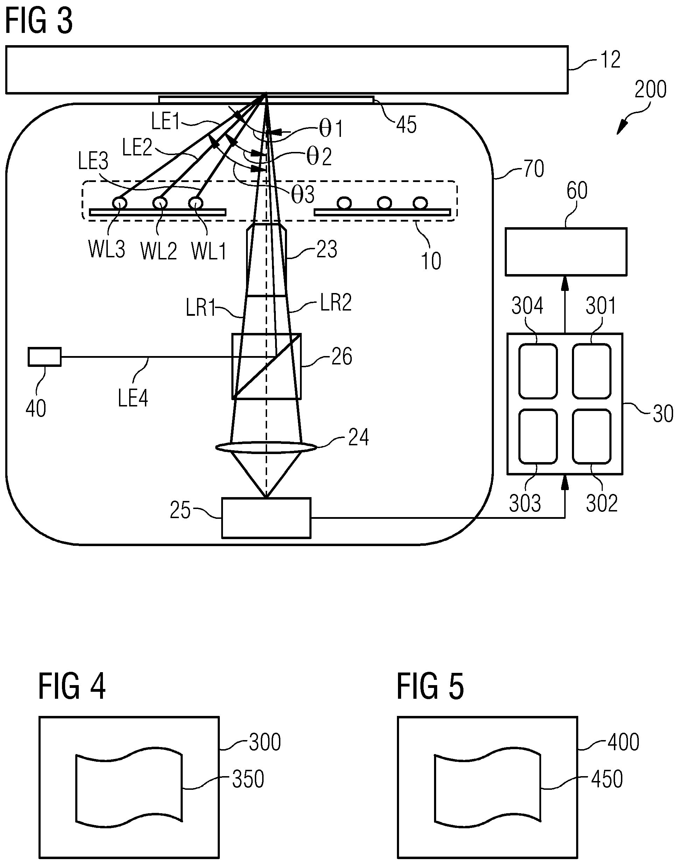

Fig. 2 is a block diagram showing an exemplary embodiment of a method for the digital imaging of unstained tissue samples 11, 12 corresponding to the present invention, preferably to be performed with the optical system 100 depicted in Fig. 1 and/or the optical system 200 depicted in Fig. 3. The method comprises a number of steps.

In a first step S1, an unstained tissue sample 11, 12 is illuminated with light sources WL1, WL2, WL3 of the same or different wavelengths, preferably in the UV region of the electromagnetic spectrum and adapted to produce fluorescence of parts of the unstained tissue sample 11, 12. This illumination of the tissue sample 11, 12 is preferably done sequentially, with one light source WL1, WL2, WL3 lit at a time. Due to the different position of the light sources WL1, WL2, WL3, they define different light incidence angles Θ1, Θ2, Θ3 with respect to the tissue sample 11, 12.

In a step S2, the light emitted from the unstained tissue sample 11, 12 after being illuminated by each of the light sources WL1, WL2, WL3 is detected (or captured) by the light detector 25 of a microscope (i.e. a light-sensitive sensor, typically a CCD camera). This generates a collection of images, corresponding to the illumination of the tissue sample 11, 12 by each of the light sources WL1, WL2, WL3.

In an optional step S21, in cases where the field of view might not be sufficient to cover the region of interest of the tissue sample 11, 12 needed to reach a diagnosis or a clinical decision, the field of view of the digital image can be increased by employing a scanning device. This scanning device can comprise an engine connected to a computer which is adapted to facilitate a X/Y lateral scanning by moving the optical system 100, 200 on the plane perpendicular to the beam path such that an enlarged region of the tissue sample 11, 12 can be imaged.

In a step S3, a digital image of the tissue sample 11, 12 is generated, based on the collection of images captured by the light detector 25, using the methods of Fourier Ptychography Microscopy. These methods may comprise at least a number of steps.

In a step S31, an information about the light arrangement of the first illumination source unit 10 and the second illumination source unit 40 are obtained. In particular, this information comprises the positions of the light sources WL1, WL2, WL3 (including the incidence angles Θ1, Θ2, Θ3) together with the values of the corresponding wavelengths.

In a step S32, using the information about the light arrangement of the first illumination source unit 10 and the second illumination source unit 40, the low-resolution images collected by the light detector 25 are stitch together in Fourier space to generate an information about the spatial distribution of the intensity and phase of the light coming from the tissue sample 11, 12.

In a step S33, using the information about the intensity and phase of the light coming from the tissue sample 11, 12, a digital image of the tissue sample 11, 12 is generated. This digital image has a large field of view (at least 120 mm²), a large depth of field and a high resolution (typically under the micron).

In a step S34, the generated digital image is saved and stored and is made accessible for later retrieval and re-examination. Optionally, the generated digital image can be saved along with the associated images collected by the light detector 25.

Fig. 3 is a schematic depiction of an optical system 200 for the digital imaging of unstained tissue samples 12 according to another embodiment of the present invention.

In the embodiment depicted in Fig. 3, the optical system 200 of the invention is particularly adapted to the examination of a tissue sample 12, which can be, e.g., the epidermis of a patient. In this embodiment, the tissue sample 12 is not sliced and the optical system 200 is simply attached to or pressed against the tissue sample 12 (in this case the epidermis). Such embodiments of the invention are particularly advantageous for the direct imaging of skin inflammations or abnormalities. With the optical system 200 of the present invention, a pathologist can examine the skin of a patient with the visualization provided by the graphical user interface 60 and diagnose skin diseases such as skin cancers (in particular melanoma) without the need to remove samples of the skin of the patient and to have to wait for the processing of the samples in an external laboratory. The clinical workflow gets thus simplified and a process that could take days and require the patient to arrange for a second visit can be taken care of in a matter of minutes during a single visit.

The optical system 200 of Fig. 3 is covered in a sterilization wrap (or sterilization drape) 70, which is arranged to isolate those parts of the optical system 200 that could get in contact with the patient. The sterilization wrap 70 is especially suited for explorations during a surgical procedure, for example during a tumor resection surgical intervention. In this cases, the optical system 200 can be used to examine tumorous tissue and determine where its boundaries are. With this embodiment of the invention, tumorous areas can be identified with precision and the resection areas can be accordingly optimized.

The coverslip 45 of the optical system 200 depicted in Fig. 3 is configured to facilitate the view of the tissue sample 12 by flattening its surface. This flattening can be achieved by exercising a soft pressure on the tissue sample 12 during the examination. The coverslip 45 can be a consumable viewing glass attached to or sealed onto the sterilization wrap 70. Since the coverslip 45 is placed between the tissue sample and the objective 23 of the microscope, the light rays LE1, LE2, LE3, LE4 have to go through the coverslip 45 before reaching the tissue sample 12. It is therefore important that the coverslip 45 is made of a material which are transparent to the wavelengths of the light sources WL1, WL2, WL3 of the first illumination source unit 10 and of the light sources of the second illumination source unit 40.

The optical system 200 of Fig. 3 can be partially or completely miniaturized, and become a portable device for digital imaging in cutaneous explorations. In this case, it might be advantageous to power the optical system 200 with batteries and to provide it with wireless communication capabilities. In this way, part of the optical system 200 could be realized as a pocket device. In some preferred embodiments, the Fourier Ptychography unit 30 could be realized in a server or a cloud platform. In some other preferred embodiments, the graphical user interface 60 could be preferably a computer screen onto which the digital images generated by the Fourier Ptychography unit 30 could be visualized. In some advantageous embodiments, the Fourier Ptychography unit 30, the graphical user interface 60 and the remaining part of the optical system 200 could be thus realized as three distinct devices that can be connected with each other, e.g., through Bluetooth or wireless networks or by cables, respectively.

The optical system 200 can also be provided with physical means to be locked, fastened, adhered or attached to other devices or structures present in the clinical or medical environment, such that it can be correctly positioned for the examination of the tissue sample 12.

Fig. 4 shows a schematic block diagram illustrating a computer program product 300 according to an embodiment of the third aspect of the present invention. The computer program product 300 comprises executable program code 350 configured to, when executed, perform at least some of the steps of the method according to the second aspect of the present invention, in particular the step S3 (preferably comprising the steps S31 to S34) as it has been described with respect to Fig. 2.

In some preferred embodiments of the present invention, the executable program code 350 is configured to, when executed, perform all the steps of the method according to the second aspect of the present invention as disclosed with respect to Fig. 2.

Fig. 5 shows a schematic block diagram illustrating a non-transitory computer-readable data storage medium 400 according to an embodiment of the fourth aspect of the present invention. The data storage medium 400 comprises executable program code 450 configured to, when executed, perform at least some of the steps of the method according to the second aspect of the present invention, in particular the step S3 (preferably comprising the steps S31 to S34) as it has been described with respect to Fig. 2.

In some preferred embodiments of the present invention, the executable program code 450 is configured to, when executed, perform all the steps of the method according to the second aspect of the present invention as disclosed with respect to Fig. 2.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

The previous description of the disclosed embodiments are merely examples of possible implementations, which are provided to enable any person skilled in the art to make or use the present invention. Various variations and modifications of these embodiments will be readily apparent to those skilled in the art, and the generic principles defined herein may be applied to other embodiments without departing from the spirit or scope of the present disclosure. Thus, the present invention is not intended to be limited to the embodiments shown herein but it is to be accorded the widest scope consistent with the principles and novel features disclosed herein. Therefore, the present invention is not to be limited except in accordance with the following claims.

### List of Reference Signs

- 10: first illumination source unit
- 11: unstained tissue sample
- 12: unstained tissue sample
- 23: objective
- 24: focusing lens
- 25: light detector
- 26: beam splitter
- 30: Fourier Ptychography unit
- 40: second illumination source unit
- 45: coverslip
- 46: coverslip
- 60: graphical user interface
- 70: sterilization wrap
- 100: optical system
- 200: optical system
- 300: computer program product
- 301: light arrangement subunit
- 302: combination subunit
- 303: image recovery subunit
- 304: storage subunit
- 350: executable program code
- 400: non-transitory computer-readable data storage medium
- 450: executable program code
- LEj: light rays
- LRj: light rays
- Θj: incidence angles
- Sj: method steps
- WLj: light sources

## Claims

1. An optical system (100, 200) for the digital imaging of unstained tissue samples (11, 12), comprising:
a first illumination source unit (10), configured to illuminate an unstained tissue sample (11, 12) with light sources (WL1, WL2, WL3), each defining a different light incidence angle (θ1, θ2, θ3) with respect to the unstained tissue sample (11, 12), wherein the wavelengths of the light sources (WL1, W2, WL3) are adapted to produce fluorescence of at least parts of the unstained tissue sample (11, 12);
a microscope, comprising at least an objective (23) and a light detector (25), wherein the light detector (25) is configured to receive the light emitted from the illuminated unstained tissue sample (11, 12),
wherein the first illumination source unit (10) is located between the unstained tissue sample (11, 12) and the objective (23) of the microscope; and
a Fourier Ptychography unit (30), configured to generate, based on the light received by the light detector (25), a corresponding digital image of the unstained tissue sample (11, 12) with a first field of view by deploying Fourier Ptychography Microscopy.

2. The optical system (100, 200) according to claim 1, wherein the light sources (WL1 WL2, WL3) of the first illumination source unit (10) comprise an arrangement of LEDs.

3. The optical system (100, 200) according to any of the previous claims, wherein the first illumination source unit (10) comprises a number of light sources (WL1, WL2, WL3) with different wavelengths.

4. The optical system (100, 200) according to claim 3, wherein the wavelengths of the light sources (WL1, WL2, WL3) of the first illumination source unit (10) are correlated with the light incidence angle (θ1, θ2, θ3) under which they illuminate the unstained tissue sample (11, 12).

5. The optical system (100, 200) according to any of the previous claims, wherein the wavelengths of the light sources (WL1, WL2, WL3) of the first illumination source unit (10) are in the UV region of the electromagnetic spectrum, preferably in the UV-C region, more preferably between 260nm and 280nm.

6. The optical system (100, 200) according to any of the previous claims, further comprising a second illumination source unit (40), which is configured to illuminate the unstained tissue sample (11, 12) through the objective (23) of the microscope.

7. The optical system (100, 200) according to any of the previous claims, further comprising a coverslip (45) which is placed against a side of the unstained tissue sample (12) facing the objective (23) of the microscope.

8. The optical system (100, 200) according to claim 7, wherein the coverslip (45) is made of a material that is transparent to the wavelength of the light sources (WL1, WL2, WL3) of the first illumination source unit (10).

9. The optical system (100) according to any of the previous claims, wherein the unstained tissue samples (11) comprise slices of a thickness greater than 10 microns.

10. The optical system (100) according to any of the previous claims, further comprising a coverslip (46) which is placed against the unstained tissue sample (11) such that the unstained tissue sample (12) is between the coverslip (46) and the objective (23) of the microscope.

11. The optical system (100, 200) according to any of the previous claims, further comprising a scanning device, configured to increase the field of view of the generated digital image with respect to the first field of view.

12. The optical system (100, 200) according to any of the previous claims, wherein the Fourier Ptychography unit (30) is implemented in a decentralized computing unit, a server, an edge cloud platform, a cloud computing platform, or any combination of the aforementioned.

13. The optical system (200) according to any of the previous claims, adapted to be a portable device for the diagnostic assistance of skin abnormalities.

14. The optical system (100, 200) according to any of the previous claims, wherein the digital images generated by the Fourier Ptychography unit (30) can be visualized in a graphical user interface (60).

15. A method for the digital imaging of unstained tissue samples (11, 12), preferably to be implemented with the optical system (100, 200) according to any of the claims 1 to 14, comprising the following steps:
illuminating (S1) an unstained tissue sample (11, 12) with light sources (WL1, WL2, WL3), each defining a different light incidence angle (θ1, θ2, θ3) with respect to the unstained tissue sample (11, 12), wherein the wavelengths of the light sources (WL1, WL2, WL3) are adapted to produce fluorescence of at least parts of the unstained tissue sample (11, 12);
detecting (S2), with a light detector (25) of a microscope, the light emitted from the illuminated unstained tissue sample (11, 12); and
generating (S3), based on the light received by the light detector (25), a corresponding digital image of the unstained tissue sample (11, 12) with a first field of view by deploying Fourier Ptychography Microscopy.
